Europäisches Patentamt

(19) European Patent Office

Office européen des brevets

(11) Publication number : **0 316 184 B1**

(12) **EUROPEAN PATENT SPECIFICATION**

(45) Date of publication of patent specification :
28.09.94 Bulletin 94/39

(51) Int. Cl.⁵ : **G11B 20/10**, G11B 27/02,
G11B 27/036, G11B 27/30

(21) Application number : 88310619.7

(22) Date of filing : 10.11.88

(54) **Apparatus for detecting phase difference and apparatus for recording and reproducing data using the same.**

(30) Priority : 12.11.87 JP 286018/87
13.11.87 JP 287815/87

(43) Date of publication of application :
17.05.89 Bulletin 89/20

(45) Publication of the grant of the patent :
28.09.94 Bulletin 94/39

(84) Designated Contracting States :
DE FR GB NL

(56) References cited :
EP-A- 0 237 020
EP-A- 0 240 217
EP-A- 0 274 382
US-A- 4 211 997
US-A- 4 573 089
PATENT ABSTRACTS OF JAPAN vol. 11, no.
79 (P-555)(2526) 11 March 1987, & JP-A-61
236073 (HITACHI LTD.) 21 October 1986,

(56) References cited :
JP-A-62 200565 *SONY CORP.* Sept.4,1987,
&& PATENT ABSTRACTS OF JAPAN,
Vol.12,No.53,* P-668 ** 2900 *Febr.18,1988,
PATENT ABSTRACTS OF JAPAN vol. 12, no.
199 (P-714)(3046) 09 June 1988, & JP-A-63
002187 (SANYO ELECTRIC CO.,LTD.) 07
January 1988,

(73) Proprietor : MATSUSHITA ELECTRIC
INDUSTRIAL CO., LTD.
1006, Oaza Kadoma
Kadoma-shi, Osaka-fu, 571 (JP)

(72) Inventor : Adachi, Tatsuya
5-46-306, 1-chome Meitoku
Neyagawa-shi Osaka-fu, 572 (JP)

(74) Representative : Crawford, Andrew Birkby et al
A.A. THORNTON & CO.
Northumberland House
303-306 High Holborn
London WC1V 7LE (GB)

## Description

The present invention relates to an apparatus for recording and reproducing digital data, such as R-DAT (rotary head digital audio tape recorder), and more particularly to techniques for after-recording and connected recording.

The digital recording technology has lately been applied to many fields such as audio and visual fields, and new techniques of CD player, R-DAT, digital VTR, etc. have been well established. In these fields, along with the fundamental recording and reproducing, such techniques as "after-recording" and "connected recording" have become important. The "after-recording" is a technique for rewriting only a part of a recorded track. For example, when a sound and a program number corresponding to the sound are recorded on respective tracks, only the program number is rewritten without rewriting the sound. For example, when an after-recording is made at R-DAT, old and new recording tracks must be equal to each other in recording phase in both the direction of tracks and the direction perpendicular to the tracks. If the recording phases are different in the direction perpendicular to the track, the recording track will become in the form of a bent line, and there will be difficulties in tracking during reproduction. If the recording phases are different in the direction of the track, necessary signals would be erased or signals to be erased would not be erased.

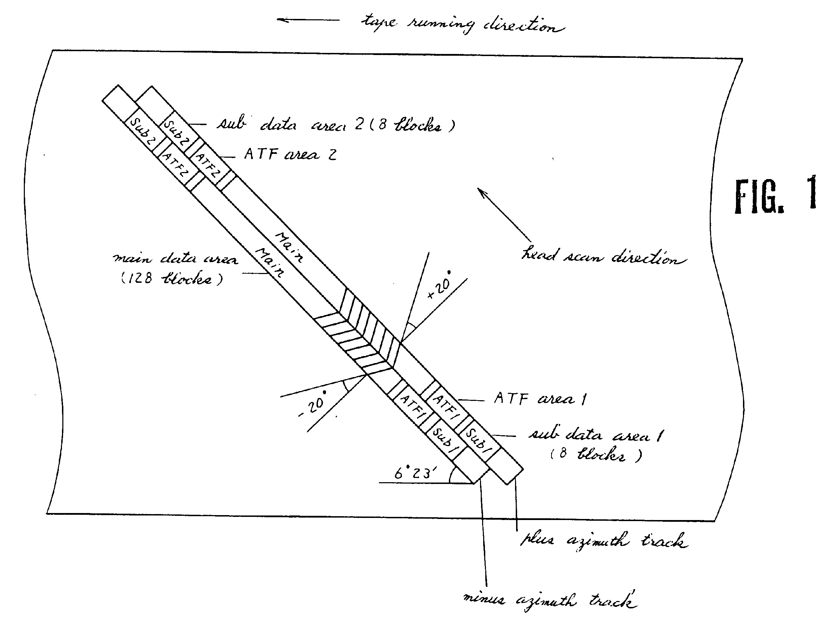

The phases of the reproduced signal and recording signal will be described. For example, in the R-DAT, since tracks of same recording format are recorded on a tape repeatedly, the concept of phase can be applied. Fig. 1 illustrates a track format of R-DAT. The track of R-DAT involves a plus azimuth track and a minus azimuth track. A single track is composed of three data areas consisting of a sub data area 1, a main data area and a sub data area 2, and AFT areas 1, 2 in which are recorded AFT signals for use in the tracking servo. The sub data areas 1, 2 are areas which principally store data used in rapid search, such as time codes, and which are each divided into eight blocks, with a particular section having block address recorded therewithin. The main data area, which is an area wherein PCM audio data are mainly to be recorded, is divided into 128 blocks each having block address recorded in a particular section thereof. The block addresses are being recorded at uniform intervals. For examples, when a part of the sub data area 1 is used to carry out after-recording, it is necessary to form a new recording track so as to conform to the position of the part of the sub data area 1 of the old recording track. For this purpose, it is preferable that block 0 in a reproduced signal and block 0 in a recording signal be consistent with each other in timing. If both the blocks 0 are consistent in timing with each other, other blocks will also be in time with each other. The state in which any blocks within the tracks are in time with each other shall be defined as a state in which the phase difference between the reproduced signal and the recording signal is equal to '0'. A track recorded in such a state will make no phase difference to the old recording track. In the case of R-DAT, recording periods for the tracks corresponding to 196 blocks including portions where no block address is recorded and non-recording periods corresponding to 196 blocks alternate with each other and therefore, the value of phase difference will be in the range between -392 blocks and +392 blocks.

The "connected recording" is a technique of recording new tracks in succession to the already recorded tracks. In this operation, in order to avoid any hindrance to data reproducing operation at connected points, consideration must be taken so that the recording phase will be brought in accordance with the direction of tracks and the direction perpendicular to tracks and that signals for use in tracking may be well connected with each other.

As described above, when the after-recording and connected recording take place, it is necessary to have the old and new recording tracks consistent with each other in recording phase in both the direction of tracks and the direction perpendicular to the tracks. For this purpose, it is necessary that a new recording be carried out in accordance with the phase of the reproduced signals. Should the phase difference be increased between the reproduced and recording signals, the new recording track will not consist with the old recording track in phase, and so, the recording format will become abnormal with the result that normal tracking servo and reproducing cannot possibly take place.

Consequently, a conventional recording apparatus, taking up R-DAT for example, has employed a servo method involving steps of producing at the signal processor a timing signal which is a standard of rotation of a cylinder provided with two heads, and synchronizing the rotational phase of the cylinder with the phase of a recording signal, based on the timing signal.

However, the problem is that the above-mentioned arrangement requires the provision of a mechanical phase generator for knowing the rotational phase of the cylinder, which may problematically cause mounting errors and its detection errors as well, so that the phase accuracy of the reproduced and recording signals cannot sufficiently be gained. Thus, when after-recording or connected recording takes place, the old and new recording tracks will be out of phase with each other in the direction of track, thus affecting subsequent reproduction unfavorably.

As a means of solving this problem, a method was disclosed by a publication "ELECTRONICS LIFE" published from Nippon Hoso Shuppan Kyokai (NHK) in January, 1986 (see pages 35 to 45, especially page 41), in which a signal for tracking servo is used to detect the recording phase of an old recording track in the direction of track for controlling the phase of a new recording signal based on the detected data. Now, the description of this method for controlling the phase of a recording signal is made as follows.

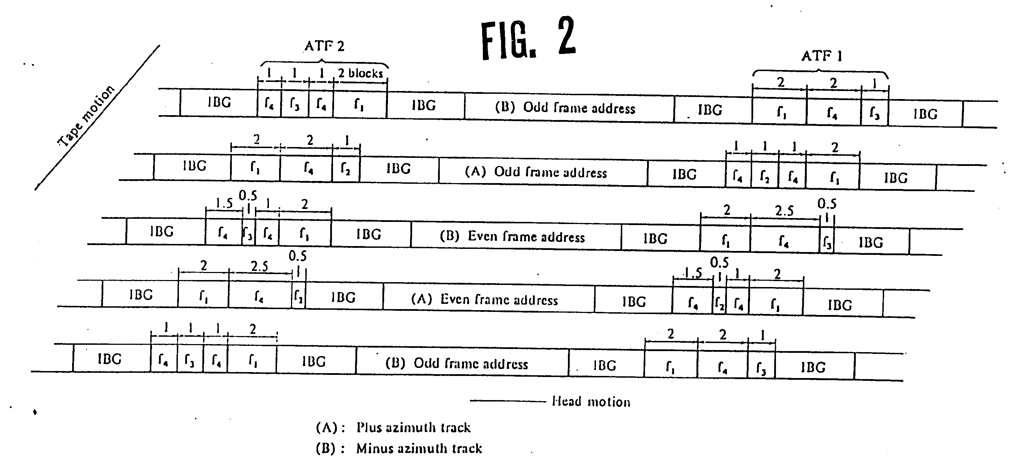

Fig. 2 shows one example of the recording patterns of ATF areas 1 and 2. In the drawing, f1 is a signal of 130 KHz, f2, 522 KHz, f3, 784 KHz, and f4, 1.57 MHz, the f1 being used as a pilot signal for detecting a tracking error by use of the amount of cross talk, and f2, f3 being used as synchronization signals for detecting the pilot signal. The recording patterns of AFT signals vary with four track-cycles. As descibed above, the signals in the AFT area are signals adapted to be recorded for being used in the tracking servo, but these can be a standard scale for detecting the phase of a recorded signal because the recording pattern is dependent upon the four track-cycles. For example, by detecting the timings of the start of the f1 area where is recorded the lowest frequency in the AFT area of the reproduced signal and then deciding the phase of a recording signal so that the timing of the start of the f1 area in a recording signal to be recorded and the timing of the start of the f1 area in the reproduced signal will be synchronized with each other, the old and new recording tracks will be in phase with each other with respect to the direction of track. Among the signals in the ATF area, only signals of particular frequencies are recorded successively over particular sections, and so in order to detect the phases of the reproduced signals in a precise manner, the changing points of the frequencies within the ATF area must be detected. However, if attended by burst errors, the changing points may not be detected or portions foreign to the changing points may be taken for changing points. Hence, for increasing the reliability of the phase values of the reproduced signals detected, it is needed to average several values of phase or to undertake a process for protection, such as a process by decision of majority, thus resulting in creation of a problem that the hardware will inevitably become huge in scale. Additionally, since there are only two ATF areas for one track, the time corresponding to several tracks is required to find the values of phase for a number of times. Such being the case, information of phase of the reproduced signals can be always obtained only after a time delay corresponding to several tracks, thereby causing delay in control of the phase of recording signals. This creates another problem that in such a structure the change of the old recording tracks in recording phase cannot fully follow.

An object of the present invention is to provide an apparatus for recording and reproducing data wherein block addresses are extracted from reproduced signals and compared with a reference address, then the phase difference between the reproduced signal and the reference address is detected with a high reliability at the minimum time delay, and then by reflecting the result on the phases of the recording addresses, the recording signal and reproduced signal are put in phase with each other so that at the time of after-recording or connected recording, recording tracks may be formed which have been set to the recording phase in the direction of track.

The present invention provides an apparatus for detecting a phase difference of an input signal divided into blocks, comprising:

block address detecting means for detecting a block address from the input signal divided into blocks;

reference timing generating means for generating a reference address (R3RADR) from a helical scan cylinder synchronisation signal (R3CP); and

phase difference detecting means for detecting a phase difference between the input signal and the reference address by use of the reference address (R3RADR) and the block address (PBAD) upon detection of an effective block address and generating a phase correction data (STBLK/RCBLK).

In a preferred embodiment, the above apparatus is provided in a data recording and reproducing apparatus and after-recording is performed by steps of detecting effective block addresses, finding the phase-difference between reproduced signal and reference address by use of the then reference address and the block address, and correcting the phase of recording addresses, whereby using the corrected recording addresses, the after-recording can be made in accordance with the phases of the reproduced signals. Furthermore, the present invention makes it a rule to check the continuity of block addresses when the block addresses to be used in detection of the phase difference are extracted, thereby ensuring that the reliability of the extracted block addresses will be increased. The fact that score of block addresses are generally recorded on a single track tends to limit possibilities of totally failing to detect effective block addresses. Consequently, it is out of bounds of possibility that malfunction will result from any value of phase difference found by using the extracted block address itself to decide the phase of recording signal. In this respect, the process can be simplified because the invention avoids the necessity of carrying out any treatment for protection, using a plurality of extracted phase difference as in the method using ATF signals, and besides, a quicker response can be made to any change of the recording phase in the direction of track of old recording track since there is no long delay in control of the phase of recording signals.

The present invention further provides a data recording and reproducing apparatus comprising:

recording phase detecting means for detecting a recording phase of a first recording track recorded on a recording medium, the recording phase detecting means comprising:

block address detecting means for detecting a reproduced block address from a reproduced signal;

reference timing generating means for generating a reference address (R3RADR) from a helical scan cylinder synchronisation signal (R3CP); and

phase difference detecting means for detecting a phase difference between the reproduced signal and the reference address (R3RADR) by use of the reference address and the reproduced block address (PBAD) upon detection of an effective block address and generating a phase correction data (STBLK/RCBLK);

connected recording phase control means for controlling the recording phase of a second recording track (RCBLK) according to the recording phase of the first recording track; and

recording means for recording data on the recording medium such that the recording phase is controlled by said connected recording phase control means.

The foregoing arrangement allows the realization of a connected recording set to the recording phase in the direction of track by finding the phase difference between the reproduced signal and the reference address, correcting the phase of the recording address, and utilizing the corrected recording address.

Additionally, said recording phase data generator is not only tuned to the recording phase of the old recording track to record a new track, but also the recording phase in the direction of track is shifted gradually to the center value possessed by the device, whereby the recording phase can be converged into the center value successively. Use of this method enables the realization of an excellent apparatus for recording and reproducing which does not permit any accumulation of errors in correcting the recording phase even in frequent repetition of the connected recording.

Fig. 1 is a view showing the track format of a R-DAT.

Fig. 2 is a view showing examples of the recording patterns in ATF areas 1, 2.

Fig. 3 is a block view showing a structure of the apparatuses for recording and reproducing data in the first and second embodiments.

Fig. 4 is a timing chart representing the operation of the servo block.

Fig. 5 is a block view showing a structure of the modulation and demodulation unit in the apparatus of the first embodiment of the present invention.

Fig. 6 is a view showing the block format of R-DAT.

Fig. 7 is a timing chart showing the procedure steps of detection of the block address.

Fig. 8 is a timing chart showing the relation between the reproducing block address and the reference address.

Fig. 9 is a timing chart showing the operation of the recording timing generator.

Fig. 10 is a timing chart showing the timing of the after-recording in the sub data area.

Fig. 11 is a block view showing an arrangement of the modulation and demodulation unit of the second embodiment of the apparatus in accordance with the present invention.

Fig. 12 is a view illustrating recording patterns during connected recording.

Now, the first embodiment of the apparatus for recording and reproducing data in accordance with the present invention will be described with reference to the drawings.

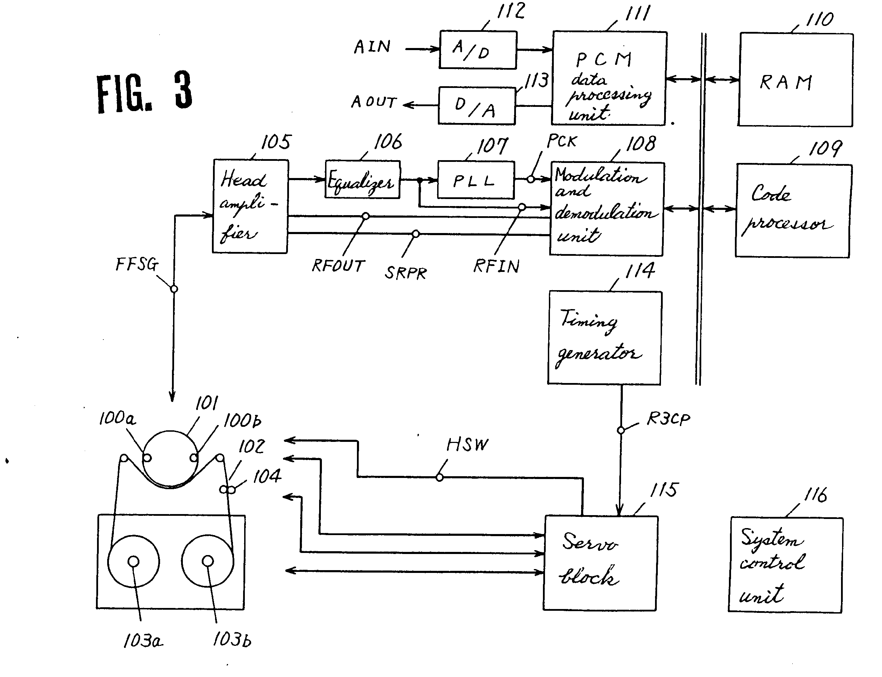

Fig. 3 shows the first embodiment of the apparatus for recording and reproducing of the present invention which has been applied to R-DAT (Rotary head digital audio tape recorder). In the drawing, the numerals 100a and 100b designate recording and reproducing heads respectively having azimuth angles of $\pm 20°$, 101 a cylinder, 102 a magnetic tape, 103a and 103b take-up reels for the tape 102, 104 a capstan for moving the tape 102 at a given speed, 105 a head amplifier for the recording and reproducing heads, 106 an equalizer for practicing wave form equalization, 107 a PLL (Phase Locked Loop) circuit for extracting a reproducing clock PCK adapted to sample reproduced data from reproduced signals, 108 a modulation and demodulation unit for demodulating the reproduced data and modulating a recording signal, 109 a code processor for detecting, correcting errors, and producing an error correction code, 110 RAM for storing demodulated data, PCM data, etc., 111 a PCM data processing unit for interpolating PCM data, 112 an A/D converter, 113 a D/A converter, 114 a timing generator for generating fundamental clocks of a cylinder synchronization signal R3CP, and the modulation and demodulation unit 108, the code processor 109, the RAM 110, and the PCM data processing unit 111, 115 a servo block for controlling the cylinder 101, reels 103a, 103b, and capstan 104, and 116 a system control unit for indicating modes of the system.

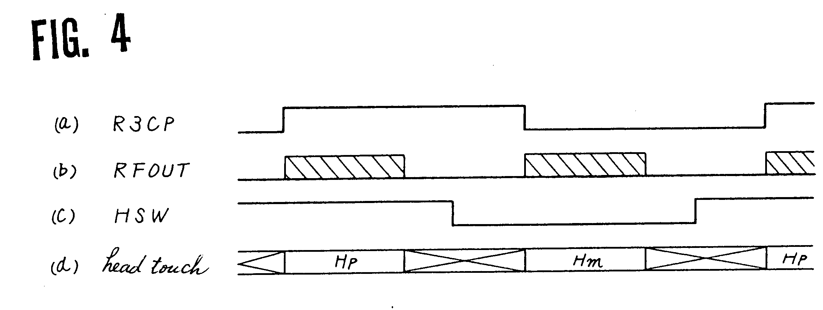

Then, the flow of signals during recording will be described. According to the indication of a recorded mode by the system control unit 116, an audio input AIN is inputted into the A/D converter 112 which converts it to a 16-bit PCM data is received by the PCM data. The PCM data is received by the PCM data processing unit 111, and then transmitted as 8-bit data to the RAM 110, wherein it is interleft for saving. The code processor 109 acts to add an error correction code to the PCM data saved in the RAM 110 to produce data before modulated for saving the latter in the RAM 110. Then, the modulation and demodulation unit 108 receives at a determined timing, the data before modulated from the RAM 110, to produce a recording signal RFOUT through the modulating said modulation processes. The recording signal RFOUT is transferred through the head amplifier 105 to the heads 100a, 100b. In the other hand, the servo block 115 serves to control the rotation of the cylinder 101 with reference to a cylinder synchronization signal R3CP generated by the timing generator 114 so that the head touch section and the recording signal RFOUT will be in phase with each other, and to produce a head switching signal HSW, and decide to which one of the heads, + azimuth and - azimuth, a recording current should be applied. Fig. 4 is a timing chart showing the operation of the servo block. In said drawing, R3CP is a cylinder synchronization signal, and the servo block controls the rotation of the cylinder in such a manner that the recording signal RFOUT and the head touch section will be in phase with each other, and also acts to generate a signal HSW for switching + azimuth head Hp and - azimuth head Hm. At this time, the tape 102 is run at a constant speed and tracks having a uniform width are recorded on the tape.

Next, the flow of signal during reproduction will be described. When the system control unit 116 indicates a reproducing mode, the cylinder 101 is controlled, as at the time of recording, by the servo block 115 with reference to R3CP to synchronize the head touch section with the demodulation timing. Additionally, the running speed of the tape is controlled by use of a method called ATF (Automatic Track Finding) so as to enable the head to trace the track. Head signals RFSG reproduced by the heads 100a, 100b are transmitted through the head amplifier 105 to the equalizer 106, in which after having processed for wave form equalization, the head signals are delivered to PLL107, where after the extraction of reproducing clock takes place, the signals are fed to the modulation and demodulation unit 108. The modulation and demodulation unit 108 writes demodulated data on RAM 110. Furthermore, the code processor 109 reads out the demodulated data from RAM 110, thereby detecting and correcting any error. The PCM data processing unit reads out 8-bit data upon correction from RAM 110, deinterleaves it, and transfer the data as the 16-bit data to the D/A converter 113. In the meantime, an interpolation process is carried out at the code processor 109 for data which have been considered as uncorrectable. D/A converter 113 converts PCM data to an audio signal Aout to output it.

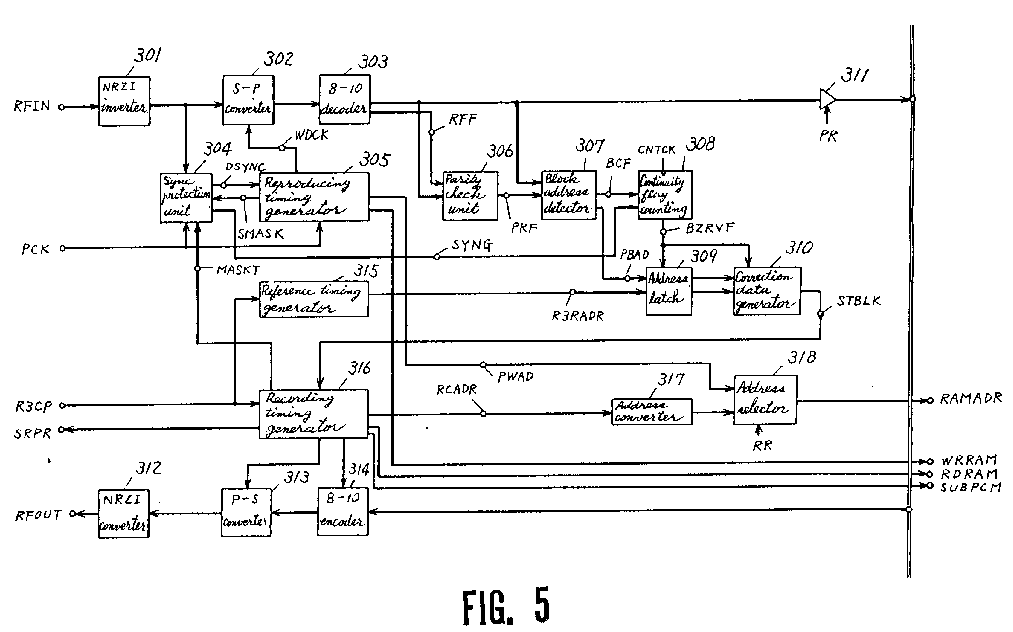

Now, the detailed structure of the modulation and demodulation unit 108 will be described. Fig. 5 is a block view showing the structure of the modulation and demodulation unit 108. In this drawing, 301 identifies an NRZ1 inverter for inverting reproduced signal RFIN which has been NRZI modulated to NRZ signal, and 304 a synchronization protection unit of extracting a block synchronization signal SYNC from the NRZ signal, sending out to the reproducing timing generator DSYNC giving a reference timing, and achieving a protective action to avoid occurrence of DSYNC even if the SYNC has been erroneously detected. Said synchronization protection unit is adapted to output a step-out flag SYNG when the phase shift has been detected.

302 identifies a S-P converter of performing a serial-parallel conversion by means of a word clock which generates an NRZ signal at the reproducing timing generator, and 303 an 8-10 decoder of converting 10-bit data processed by the S-P converter to 8-bit data and also raising a RF error flag RFF relative to data inconsistent with the regulation for 8-10 modulation.

305 is a reproducing timing generator of generating a demodulation processing timing by means of the reproducing clock with reference to a synchronization detecting flag DSYNC sent out of the synchronization protection unit 304. The reproducing timing generator 305 is designed to generate a clock WDCK for S-P conversion, a reproducing word address PWAD, an RAM write-in request signal WRRAM, and an SYNC window SMASK for use in the synchronization protection unit 304.

306 is a parity check unit of effecting a parity check of 3-word following the SYNC, W1, W2, and P and which is adapted to raise a parity OK flag only when RF flag RFF supplied from the 8-10 decorder 303 is equal to 0 (no error) and the parity check is OK.

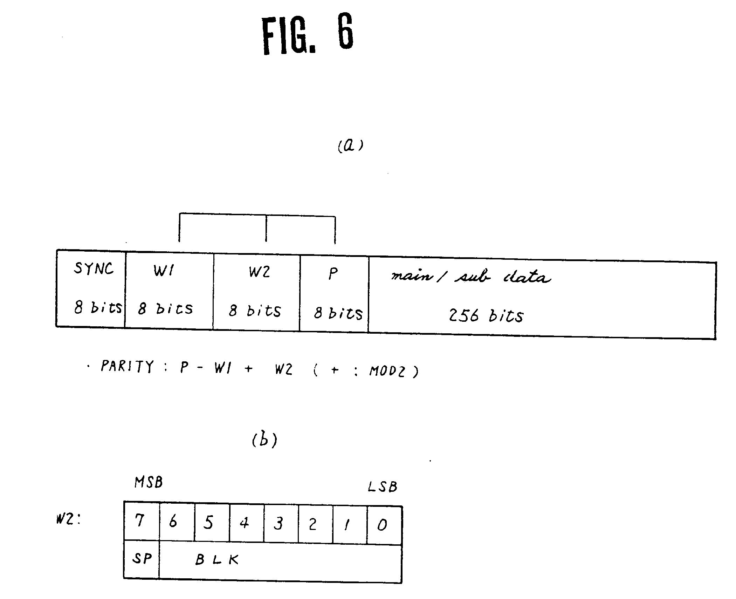

Fig. 6(a) shows a block format of R-DAT. Fig. 6(b) shows a W2 format. The block address BLK within W2 is 7 bits in the main data area, and 4 bits in the sub-data area, i.e. for one track, the main data area has 128 blocks and the sub-data area has 16 blocks. MSB of W2 is a sub-area flag which will be '1' in the sub-data area. Fig. 1 shows a track format of R-DAT.

307 is a block address detector which is operative to output as a reproduction block address PBAD a block address BLK introduced when parity OK flag PRF is equal to 1, to output as reproduction block address PBAD the previous block address $PBLK_{-1} + 1$ when PRF is equal to 0, and to detect the continuity of the block address, thereby sending out a block continuity flag BCF.

308 is a continuity flag counting unit comprising a continuity flag counter which will count up when BCF is equal to 1 (continuous block address) and PRF is equal to 1, in other words, when effective block addesses are detected continuously by two blocks, and which will be cleared when a step-out flag SYNG from the synchronization protection unit is equal to 1 (occurrence of step-out) or when BCF is equal to 0 (discontinued block address) and PRF is equal to 1, and a BZRVF producing circuit which is adapted to output a block address effective flag BZRVF when the count value of the continuity flag counting unit turns out to a specified value N.

309 is an address latch of simultaneously latching at the timing of appearance of BZRVF a reproducing block address PBAD and a standard address R3ADR outputted from the reference timing generator 315, and 310 is a correction data generator which operates to find from the latched standard address and reproducing block address the discrepancy between the phase of the reproducing signal and the phase of the standard address outputted by a reference timing generator 315 so that the phase correction data STBLK will be given to the recording timing generator 316.

311 is a gate for writing demodulation data in the RAM 110, which gate is adapted to be opened upon reproduction by recording/reproducing switching signal PR. 314 is a 8-10 encoder for doing the 8-10 conversion, 313 a P-S converter for effecting the parallel-serial conversion, and 312 a NRZ1 converter for converting the serial data to NRZ1 signal, and an output recording signal RFOUT is transmitted to the head amplifier 105.

315 is a reference timing generator of generating a fixed timing based on the crystal with reference to said cylinder synchronization signal R3CP. A recording timing generator 316 is adapted to produce not only a recording address RCADR used for reading out data before modulated from the RAM but also a clock for 8-10 conversion as well as parallel-serial conversion. The recording address RCADR is produced as an initialized value being phase correction data STBLK sent out of the correction data generator with reference to the cylinder synchronization signal R3CP. That is, the phase correction data STBLK is capable of shifting a recording timing relative to R3CP. It also may feed a window MASKT for SYNC mask to the synchronization protection unit.

317 is an address converter of converting recording address to a shape suitable for the address of the RAM, and 318 is an address selector of switching a reference address R3ADR, a reproducing block address, and a reproducing word address PWAD by means of a recording/reproducing switching signal PR to supply the switched PWAD as RAMADR to the RAM 110.

Now, the phase correction process usable for after-recording, connected recording, etc. will be explained. As described with reference to Fig. 4, in the reproducing mode, the servo block 115 is operative to control the phase of the head touch section with reference to the cylinder synchronization signal R3CP so that a reproduced signal RFIN may be obtained which is in a correct phase relative to R3CP. However, when interchangeability must be considered against any possible error in applying a PG (Phase Generator) adapted to detect the rotary phase of the cylinder, there lies a problem that a sufficient control of the cylinder phase can not be achieved indeed. To overcome the problem, a method is provided in which by detecting any phase shift occurred in a reproduced signal to R3CP, the phase of the recording timing generator 316 can be shifted relative to R3CP over several blocks before and after the recording address RCADR which is generated by generator 316. In short, since the recording timing can be produced in response to the phase of the reproduced signal, the recording track during after-recording may be brought into agreement with the original track. In addition, also in the event of the connected recording, a new recording track can be formed to the original track.

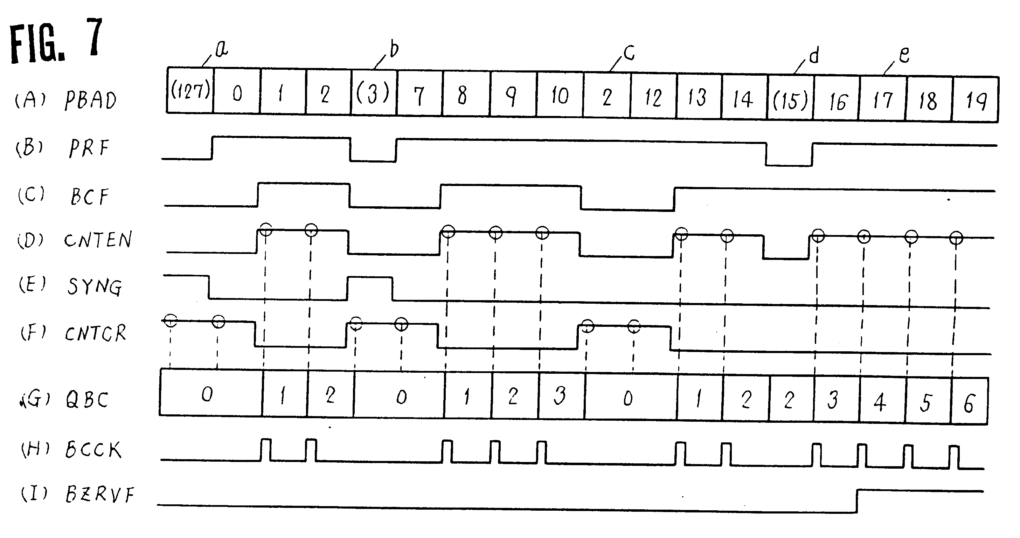

Finally, the detection method for the difference in phase between the reproduced signal and the reference address will be described. Fig. 7 is a timing chart showing a process of generating a block address effective flag BZRVF adapted to produce an output when a highly reliable block address has been detected. In the drawing, PBAD designates a block address detected by the block address detector 307. 0, 1, 2, 7, 8, ..., 19 each indicate block addresses of parity OK, and (127), (3), (15) each block addresses interpolated by the parity NG. a, b each are blocks having SYNG in an upstanding position, i.e. blocks out of phase, and c is a block wherein a block address has been erroneously detected by overlooking the parity check. PRF is a parity OK flag sent out by the parity check unit 306. BCF which is a block continuous flag where the old block and the present block are rising when the block address continues, is generated by comparing the old block address with the present block address. When BCF·PRF = 1,i.e when a continuous block address is provided, the continuity flag counter (output value: QBC) is counted up. When $\overline{BCF \cdot PRF}$ is equal to 1, i.e. when the block address is discontinuous; the continuity flag counter is cleared up. With PRF being zero, namely with the block address unclear, the continuity flag counter maintains its previous value. SYNG is a flag out of phase which will rise if a phase shift is detected in the synchronization protection unit 306, in other words, if SYNC has not been detected at a particular interval consecutively at M times (M = 1, 2, 3 ...). The continuity flag counter (output value: QBC) is cleared up by SYNG. Consequently, when counter clear signal CNTCR = SYNG + $\overline{BCF \cdot PRF}$ = 1, the continuous flag counter is cleared up.

BCCK which has been put out of the counter enabling signal CNTEN = BCF·PRF by means of a particular timing pulse, is used as a clock for the continuity flag counter, but is not counted up because the parity OK flag PRF is not rising at d. The block address effective flag BZRVF is a flag which is destined to rise when the output value QBC of the continuous flag counter becomes equal to N (N=1, 2, 3 ...), wherein the reproducing block address PBAD and the recording address RCADR are latched by the rising edge of BZRVF. Since N is equal to 4 here, BZRVF is rising at the point e. That is, a checking of the continuity of the block address of the parity OK is carried out in the state of non phase shift until BCCK rises at N times, and thereafter the final block address is employed as a highly reliable block address which will never miss any parity, whereby the then reference address R3ADR is latched to get the phase difference.

Next will be described the phase correction process. Supposing the phase difference between the reproduced signal and R3CP is $\Delta$ADR,

$$\Delta ADR = PBAD + OFS - R3ADR \quad (1)$$

Wherein
PBAD:      reproducing block address
OFS:       address offset
R3ADR:   reference address
OFS is an address offset when the phase difference $\Delta$ADR is equal to '0'. If $\Delta$ADR=0,

$$OFS = R3ADR - PBAD \quad (2)$$

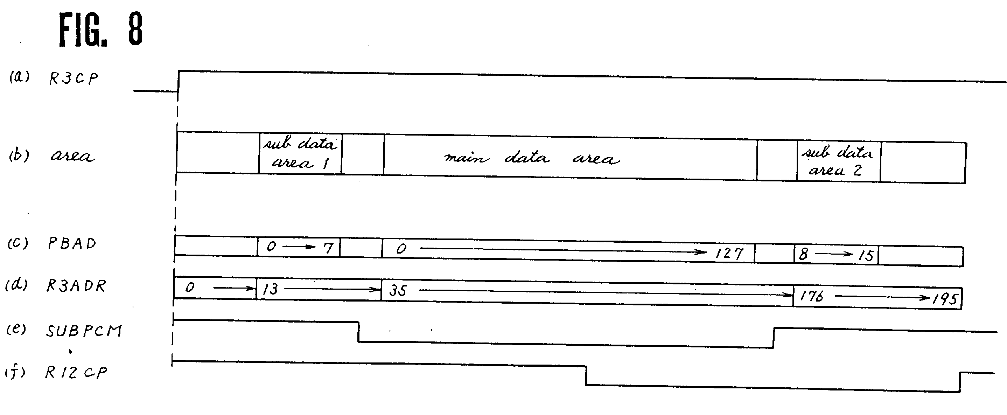

The address offset OFS is dependent on the use of the block address belonging to a particular area. Fig. 8 shows the relation between the reproducing address PBAD at R-DAT and the reference address R3ADR. To satisfy the equation (2), the value of OFS is defined as follows.

$$OFS = \begin{array}{ll} \text{——} & \text{13 block:   sub data area 1} \\ & \text{35 block:   main data area} \\ \text{——} & \text{168 block:   sub data area 2} \end{array}$$

In Fig. 8 SUBPCM is a signal for distinguishing between sub data area and main data area, and R12CP is a signal for distinguishing between the first half and the second half of a track. Signals of sub data area 1, sub data area 2 and main data area can be extracted based on SUBPCM and R12CP. Thus, use of SUBPCM as well as R12CP allows the offset OFS to be set to a correct value, with the result that the detection of phase difference may be realized by utilizing a block address of any of said three areas.

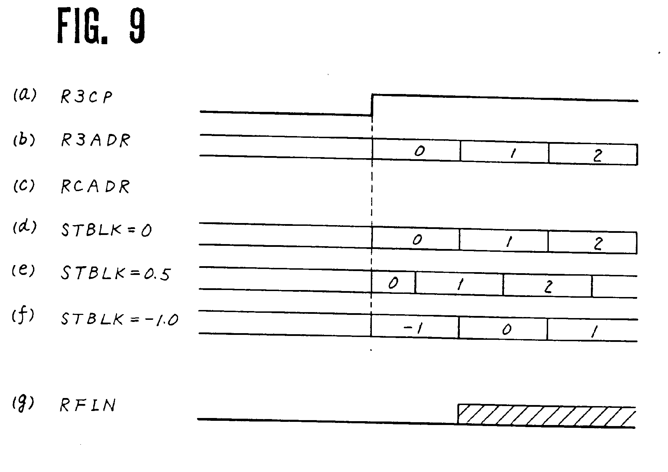

On the other hand, while the recording timing generator 316 functions to generate a recording address RCADR with reference to R3CP, the initial value of the address is governed by the phase correction data STBLK. Fig. 9 is a timing chart showing the operation of the recording timing generator 316. In the drawing, R3ADR is a reference address starting with the edge of R3CP. In case the phase correction data STBLK is equal to 0 (block), the recording address RCADR has a block 0 starting from the edge of R3CP. When STBLK=0.5 (block), RCADR begins with 0.5 block, being ahead of R3CP in phase by 0.5 block. If STBLK = -1.0 (block), RCADR starts from -1.0 block, falling behind R3CP in phase by 1.0 block. In this correction, the recording address RCADR(n) of number n track eye is expressed by the following equation.

$$RCADR(n) = R3ADR + STBLK(n) \quad (3)$$

Then, if the value of the phase difference $\Delta$ADR(n) of number n track is found out by use of the equation (1), and the next track's phase correction data STBLK(n+1) satisfies the following.

$$STBLK(n + 1) = \Delta ADR(n)$$

The recording address runs after the reproduced signal one track behind in phase. For example, if the reproduced signal RFIN is delayed for one track, the reproduced signal RFIN will coincide with RCADR in phase in the condition of STBLK = -1.0. Therefore, the recording of the address in phase with the reproduced signal can be performed by practicing the after-recording by use of the timing of RCADR corrected by STBLK.

There is provided an independent timing generator serving as a standard timing generator and recording timing generator, but the recording address RCADR arisen by the phase correction data STBLK and the recording timing generator may be used ot find the reference address R3ADR, so that the reference timing generator can be used in association with the recording timing generator. Utilizing the number n tracks phase correction data STBLK(n) and recording address RCADR(n), R3ADR may be expressed as

$$R3ADR = RCADR(n) - STBLK(n).$$

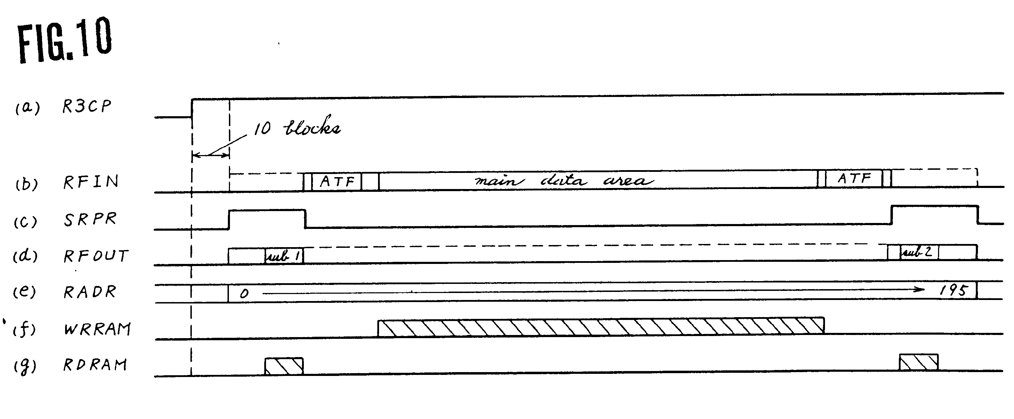

Next, the after-recording using said phase correction process will be described. Fig. 10 is a timing chart showing the timing of after-recording data in the sub data area. In the drawing, it is understood that the reproduced signal RFIN is delayed from the cylinder synchronization signal R3CP by 10 blocks. SRPR is a head amplifier switching signal, and the head amplifier 105 is adapted to be in reproducing mode when SRPR is equal to 0, but it will be put in recording mode when SRPR is equal to 1. At this time, the sub data area is in the recording mode, while the main data area is in the reproducing mode. Accordingly, the detection of the phase difference is carried out by means of the block address in the main data area. Due to the fact that the recording address RCADR is delayed for 10 blocks in phase by way of said phase correction process, the recorded signal RFOUT is to be generated with its phase being 10 blocks behind accordingly. Similarly, the head amplifier switching signal SRPR will be generated but 10 blocks behind as it is based on RCADR. The WRRAM signal and RDRAM signal are also 10 blocks behind respectively in accordance with the reproduced signal and RCADR. Therefore, the recorded pattern after the recording operation will appear continuous, without erasing an ATF signal for use in the servo control, thereby to ensure that a stable reproduction will be obtained. For accomplishing the after-recording in the main data area, SRPR is made equal to 1 in the main data area so as to bring the latter into the recording mode for subsequent detection of phase difference by use of the block address of the sub data area.

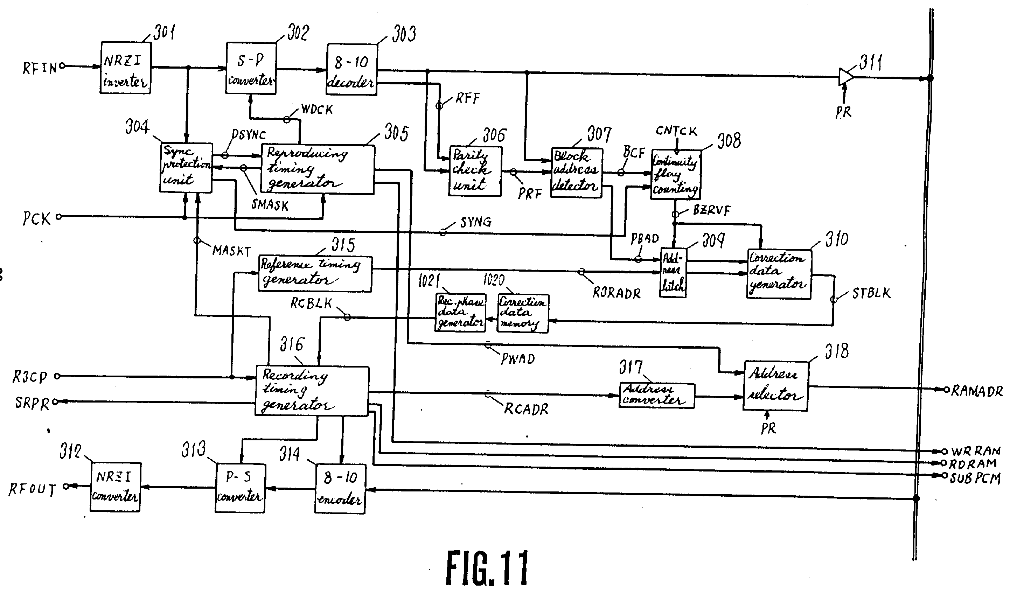

The connected recording using said phase difference detection method will now be described. Fig. 11 is a block view showing the arrangement of the modulation and demodulation unit of the second embodiment of the apparatus for recording and reproducing in accordance with the present invention. No description is made of the portions overlapping those of the arrangement of the modulation and demodulation unit of the first embodiment of the present invention as shown Fig. 5. The structure of the entire system is similar to that of the first embodiment of the present invention shown in Fig. 5.

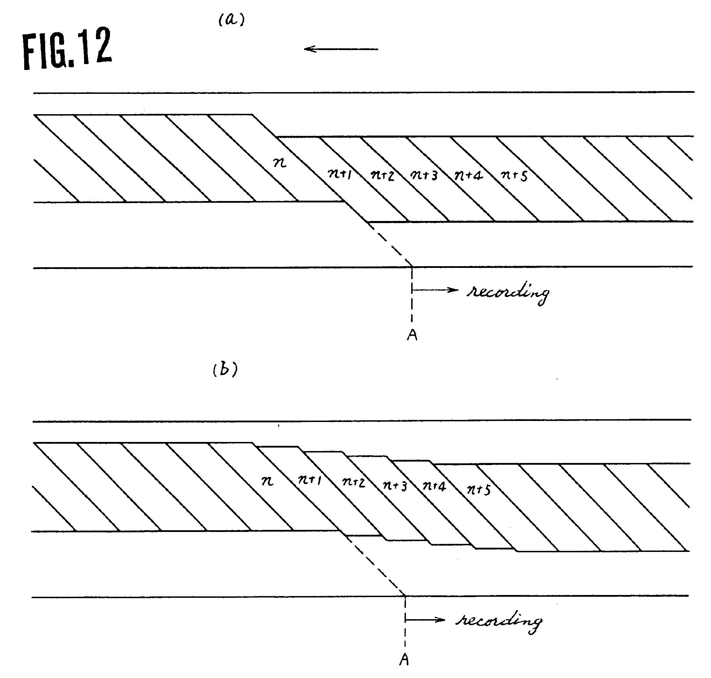

Referring to Fig. 11, 1020 is a correction data memory for memorizing phase correction data STBLK emitted from the correction data generator 1010, and 1021 is a recording phase data generator for generating recording phase data RCBLK adapted to determine the phase of the standard timing generator 315 based on the stored correction data. The operation of the connected recording will be described with reference ot Fig. 12. The connected recording is a function of recording a new track, following the prerecorded track. Then, unless the distance between the old and new tracks and the phase of the tracking in the direction of head tracing accord with each other the tracking servo will be displaced at the connection point between the old and new tracks, and so it is necessary to bring the distance and the phase between the tracks into agreement with each other. Fig. 12 illustrates a recorded pattern at the time of connected recording. In Fig. 12(a), the old track (prior to n track) is out of phase, and in case disregarding this phase shift, the connected recording takes place at the phase of the system center for use in the recording, the phases of the old track and new track (after n+1 track) change so rapidly at point A that the track recording phase becomes discontinued. Referring to Fig. 12(b), at the start of the connected recording, the recording phase of a track is gradually shifted toward the center phase rather than commencing the recording operation directly from the center phase, thereby resulting in no occurrence of a large discontinuation of phase.

The operation will be explained. The apparatus for recording and reproducing according to the present invention remains in the reproducing mode by the instructions of the system control 116 until n track is reached, and during the reproduction at n track, the correction data memory 1020 is operative to memorize phase correction data STBLK(n). At the next track, the instructions as to the recording mode issues from the system control 116 before the recording starts, and for subsequent tracking, the recording phase data generator 1021 brings forth recording phase data RCBLK(n) as follows.

$$RCBLK\,(n + i) \; = \; STBLK(n)\,(m - i/m) \quad (5)$$

$$(i = 1, 2, ...m)$$

Thus, when i=m,

$$RCBLK\,(n + m) \; = \; 0$$

So, the recording phase will become a center at m track from the start of recording. In this instance, since the recording phase always tends to focus in a determined value, however after the connected recording takes place, there will occur no accumulation of phase error. If the recording phase data RCBLK(n) has a sufficiently high accuracy, the following expression may be satisfied.

$$RCBLK\,(n + i) \; = \; STBLK(n) \quad (6)$$

$$(i = 1, 2, ...m)$$

It is to be noted that the recording phase data generator 1021 may be readily constituted by a micro processor and the like.

As described above, the apparatus for recording and reproducing in accordance with the present invention is capable of detecting the phase of reproduced signals so as to adapt the phases of reproduced signals to the reproduced signals, thereby ensuring that after-recordings, etc. will be performed in accordance with the phases of the reproduced signals.

Now that use of recording addresses consistent with the phases of reproduced signals allows the provision of windows to follow the phases of the reproduced signals, such windows are provided against the timings at which block synchronization signals SYNC may be expected so that any erroneous detection can be avoided of SYNC which may occur at other timings.

Furthermore, if data are recorded at a number of divided areas, as in R-DAT, for example, the sub data area contains sub area windows and main data area contains main area windows in such a manner that any erroneous detection due to introduction of redundant data will be prevented. As these windows tend to abide by the phases of the reproduced signals, there is little possibility of masking unnecessary data, and all the necessary data can be taken in, while unnecessary data can be discarded, which helps increase the reliability of the reproducing process.

## Claims

1. An apparatus for detecting a phase difference of an input signal divided into blocks, comprising:

   block address detecting means (307) for detecting a block address from the input signal divided into blocks;

   reference timing generating means (315) for generating a reference address (R3RADR) from a helical scan cylinder synchronisation signal (R3CP); and

   phase difference detecting means (309,310) for detecting a phase difference between the input signal and the reference address by use of the reference address (R3RADR) and the block address (PBAD) upon detection of an effective block address and generating a phase correction data (STBLK/RCBLK).

2. An apparatus as defined in claim 1, wherein said block address detecting means (307) is provided with means for checking continuity of the block address and producing continuity flags (BCF).

3. An apparatus as defined in claim 2, wherein said block address detecting means (307) is provided with counting means (308) for counting said continuity flags (BCF).

4. An apparatus as defined in claim 1 provided in a data recording and reproducing apparatus comprising means for recording data on a recording medium in the form of signals each divided into blocks and for reproducing the recorded signals; wherein:

   the block address detecting means (307) is adapted for detecting a reproduced block address (PBAD) from a reproduced signal;

   the phase difference detecting means (309,310) is adapted for detecting a phase difference between the reproduced signal and the reference address (R3RADR); and

   there is further provided recording timing generating means (316) for generating a recording address (RCADR) according to the phase correction data (STBLK/RCBLK); and

   recording means (317,318,314,313,312) for generating a recording signal (RFOUT) according to the recording address.

5. An apparatus as defined in claim 4, wherein said recording means performs after-recording based on said recording address.

6. A data recording and reproducing apparatus comprising:

   recording phase detecting means for detecting a recording phase of a first recording track recorded on a recording medium, the recording phase detecting means comprising:

   block address detecting means (307) for detecting a reproduced block address from a reproduced signal;

   reference timing generating means (315) for generating a reference address (R3RADR) from a helical scan cylinder synchronisation signal (R3CP); and

   phase difference detecting means (309,310) for detecting a phase difference between the reproduced signal and the reference address (R3RADR) by use of the reference address and the reproduced block address (PBAD) upon detection of an effective block address and generating a phase correction date (STBLK/RCBLK);

   connected recording phase control means (1021,1021) for controlling the recording phase of a second recording track (RCBLK) according to the recording phase of the first recording track; and

   recording means (316-318,314,313,312) for recording data on the recording medium such that the recording phase is controlled by said connected recording phase control means (1020,1021).

7. An apparatus as defined in claim 6, wherein said connected recording phase control means comprises a correction data memory (1020) for memorizing said phase correction data (STBLK), and recording phase data generating means (1021) for generating a recording phase data (RCBLK) adapted to control the recording phase of the second recording track according to the memorized phase correction data.

8. An apparatus as defined in claim 7, wherein said recording phase data generating means (1021) is operative to shift the recording phase data from the phase of the first recording track to a specified phase.

**Patentansprüche**

1. Vorrichtung zum Ermitteln einer Phasendifferenz eines in Blöcke geteilten Eingangssignals, die umfaßt: eine Blockadressen-Ermittlungseinrichtung (307), die eine Blockadresse aus dem in Blöcke geteilten Eingangssignal ermittelt; eine Referenztakt-Erzeugungseinrichtung (315), die eine Referenzadresse (R3RADR) aus einem Helicalscan-Zyllnder-Synchronistaionssignal (R3CP) erzeugt, und eine Phasendifferenz-Ermittlungseinrichtung (309,310), die eine Phasendifferenz zwischen dem Eingangssignal und der Referenzadresse durch Verwendung der Referenzadresse (R3RADR) und der Blockadresse (PBAD) bei Ermittlung einer wirksamen Blockadresse ermittelt und Phasenkorrekturdaten (STBLK/RCPLK) erzeugt.

2. Vorrichtung nach Anspruch 1, worin die Blockadressen-Ermittlungseinrichtung (307) mit einer Einrichtung versehen ist, um die Kontinuität der Blockadresse zu prüfen und Kontiniutätsflags (BCF) zu erzeugen.

3. Vorrichtung nach Anspruch 2, worin die Blockadressen-Ermittlungseinrichtung (307) mit einer Zähleinrichtung (308) versehen ist, um die Kontiniutätsflags (BCF) zu zählen.

4. Vorrichtung nach Anspruch 1, bereitgestellt in einer Datenaufnahme- und -wiedergabevorrichtung, umfassend ein Einrichtung, die Daten auf einem Aufzeichnungsmedium in der Form von Signalen, die jeweils Blöcke geteilt sind, aufzeichnet und die aufgezeichneten Signale wiedergibt; worin: die Blockadressen-Ermittlungseinrichtung (307) adaptiert ist, um eine Wiedergabeblockadresse (PBAD) von einem Wiedergabesignal zu ermitteln; die Phasendifferenz-Ermittlungseinrichtung (309,310) adaptiert ist, um eine Phasendifferenz zwischen dem Wiedergabesignal und der Referenzadresse (R3RADR) zu ermitteln, und weiter eine Wiedergabezeittakt-Erzeugungseinrichtung (316) zur Verfügung gestellt wird, um nach Maßgabe der Phasenkorrekturdaten (STBLK/RCBLK) eine Aufzeichnungsadresse (RCADR) zu erzeugen, sowie eine Aufzeichnungseinrichtung (317,318,314,313,312), die nach Maßgabe der Aufzeichnungsadresse ein Aufnahmesignal (RFOUT) erzeugt.

5. Vorrichtung nach Anspruch 4, worin die Aufzeichnungseinrichtung eine Nachaufzeichnung basierend auf der Aufzeichnungsadresse ausführt.

6. Datenaufnahme- und -wiedergabevorrichtung, umfassend: eine Aufzeichnungsphasen-Ermittlungseinrichtung, die eine Aufzeichnungsphase einer auf einem Aufzeichnungsmedium aufgezeichneten ersten Aufzeichnungsspur ermittelt, wobei die Aufzeichnungsphasen-Ermittlungseinrichtung umfaßt: eine Blockadressen-Ermittlungseinrichtung (307), die eine Wiedergabeblockadresse aus einem Wiedergabesignal ermittelt; eine Referenztakt-Erzeugungseinrichtung (315), die eine Referenzadresse (R3RADR) aus einem Helicalscan-Zylinder-Synchronistaionssignal (R3CP) erzeugt, und eine Phasendifferenz-Ermittlungseinrichtung (309,310), die eine Phasendifferenz zwischen dem Wiedergabesignal und der Referenzadresse (R3RADR) durch Verwendung der Referenzadresse und der Wiedergabeblockadresse (PBAD) bei Ermittlung einer wirksamen Blockadresse ermittelt und Phasenkorrekturdaten (STBLK/RCPLK) erzeugt; eine Phasenregeleinrichtung für verbundene Aufzeichnung (1020,1021) die die Aufnahmephase einer zweiten Aufnahmespur (RCBLK) gemäß der Aufnahmephase der ersten Aufnahmespur regelt, und eine Aufzeichnungseinrichtung (316-318,314,313,312), die Daten auf dem Aufzeichnungsmedlum so aufzeichnet, daß die Aufnahmephase durch die Phasenregeleinrichtung für verbundene Aufzeichnung (1020,1021) geregelt wird.

7. Vorrichtung nach Anspruch 6, worin die Phasenregeleinrichtung für verbundene Aufzeichnung einen Korrekturdatenspeicher (1020) umfaßt, der die Phasenkorrekturdaten (STBLK) speichert, sowie eine Aufnahmephasendaten-Erzeugungseinrichtung (1021), die Aufnahmephasendaten (RCBLK) erzeugt, um die Aufnahmephase der zweiten Aufzeichnungsspur nach Maßgabe der gespeicherten Phasenkorrekturdaten zu regeln.

8. Vorrichtung nach Anspruch 7, worin die Aufnahmephasendaten-Erzeugungseinrichtung (1021) imstande ist, die Aufnahmephasendaten von der Phase der ersten Aufzeichnungsspur zu einer spezifizierten Phase zu verschieben.

**Revendications**

1. Appareil permettant de détecter une différence de phase à partir d'un signal d'entrée divisé en blocs, comprenant :

un moyen de détection d'adresse de bloc (307) pour détecter une adresse de bloc à partir du signal d'entrée divisé en blocs ;

un moyen de génération de cadencement de référence (315) pour générer une adresse de référence (R3RADR) à partir d'un signal de synchronisation de cylindre à balayage hélicoïdal (R3CP) ; et

un moyen de détection de différence de phase (309, 310) pour détecter une différence de phase entre le signal d'entrée et l'adresse de référence en utilisant l'adresse de référence (R3RADR) et l'adresse de bloc (PBAD) suite à la détection d'une adresse de bloc effective et pour générer des données de correction de phase (STBLK/RCBLK).

2. Appareil selon la revendication 1, dans lequel ledit moyen de détection d'adresse de bloc (307) est muni d'un moyen pour vérifier la continuité de l'adresse de bloc et pour produire des indicateurs de continuité (BCF).

3. Appareil selon la revendication 2, dans lequel ledit moyen de détection d'adresse de bloc (307) est muni d'un moyen de comptage (308) pour compter lesdits indicateurs de continuité (BCF).

4. Appareil selon la revendication 1 prévu dans un appareil d'enregistrement et de reproduction de données comprenant un moyen pour enregistrer des données sur un support d'enregistrement sous la forme de signaux dont chacun est divisé en blocs et pour reproduire les signaux enregistrés, dans lequel :

le moyen de détection d'adresse de bloc (307) est conçu pour détecter une adresse de bloc reproduite (PBAD) à partir d'un signal reproduit ;

le moyen de détection de différence de phase (309, 310) est conçu pour détecter une différence de phase entre le signal reproduit et l'adresse de référence (R3RADR) ; et

sont en outre prévus un moyen de génération de cadencement d'enregistrement (316) pour générer une adresse d'enregistrement (RCADR) conformément aux données de correction de phase (STBLK/RCBLK) ; et

un moyen d'enregistrement (317, 318, 314, 313, 312) pour générer un signal d'enregistrement (RFOUT) conformément à l'adresse d'enregistrement.

5. Appareil selon la revendication 4, dans lequel ledit moyen d'enregistrement effectue un après-enregistrement sur la base de ladite adresse d'enregistrement.

6. Appareil d'enregistrement et de reproduction de données comprenant :

un moyen de détection de phase d'enregistrement pour détecter une phase d'enregistrement d'une première piste d'enregistrement enregistrée sur un support d'enregistrement, le moyen de détection de phase d'enregistrement comprenant :

un moyen de détection d'adresse de bloc (307) pour détecter une adresse de bloc reproduite à partir d'un signal reproduit ;

un moyen de génération de cadencement de référence (315) pour générer une adresse de référence (R3RADR) à partir d'un signal de synchronisation de cylindre à balayage hélicoïdal (R3CP) ; et

un moyen de détection de différence de phase (309, 310) pour détecter une différence de phase entre le signal reproduit et l'adresse de référence (R3RADR) en utilisant l'adresse de référence et l'adresse de bloc reproduite (PBAD) suite à la détection d'une adresse de bloc effective et pour générer des données de correction de phase (STBLK/RCBLK);

un moyen de commande de phase d'enregistrement connecté (1020, 1021) pour commander la phase d'enregistrement d'une seconde piste d'enregistrement (RCBLK) conformément à la phase d'enregistrement de la première piste d'enregistrement ; et

un moyen d'enregistrement (316-318, 314, 313, 312) pour enregistrer des données sur le support d'enregistrement de telle sorte que la phase d'enregistrement soit commandée par ledit moyen de commande de phase d'enregistrement connecté (1020, 1021).

7.  Appareil selon la revendication 6, dans lequel ledit moyen de commande de phase d'enregistrement connecté comprend une mémoire de données de correction (1020) pour mémoriser lesdites données de correction de phase (STBLK) et un moyen de génération de données de phase d'enregistrement (1021) pour générer des données de phase d'enregistrement (RCBLK) conçues pour commander la phase d'enregistrement de la seconde piste d'enregistrement conformément aux données de correction de phase mémorisées.

8.  Appareil selon la revendication 7, dans lequel ledit moyen de génération de données de phase d'enregistrement (1021) fonctionne pour décaler les données de phase d'enregistrement depuis la phase de la première piste d'enregistrement jusqu'à une phase spécifiée.

tape running direction

sub data area 2 (8 blocks)

ATF area 2

Main
Main

main data area
(128 blocks)

+20°

head scan direction

-20°

ATF area 1

sub data area 1
(8 blocks)

6°23'

plus azimuth track

minus azimuth track

FIG. 1

EP 0 316 184 B1

13

# FIG. 2

(A) : Plus azimuth track

(B) : Minus azimuth track

# FIG. 3

AIN → [A/D] *112* → [PCM data processing unit] *111*

AOUT ← [D/A] *113* ← 

[PCM data processing unit] ↔ ↔ [RAM] *110*

[Head amplifier] *105* → [Equalizer] *106* → [PLL] *107* → PCK → [Modulation and demodulation unit] *108*

[Modulation and demodulation unit] ↔ ↔ [Code processor] *109*

RFOUT  SRPR  RFIN

FFSG

[Timing generator] *114*

100a  101  100b
102
104

HSW

R3CP

[Servo block] *115*

[System control unit] *116*

103a  103b

EP 0 316 184 B1

# FIG. 4

(a) R3CP

(b) RFOUT

(c) HSW

(d) head touch

HP　Hm　HP

FIG. 5

# FIG. 6

(a)

| SYNC | W1 | W2 | P | main / sub data |
|------|------|------|------|------|
| 8 bits | 8 bits | 8 bits | 8 bits | 256 bits |

· PARITY : P - W1 + W2 ( + : MOD2 )

(b)

MSB                                    LSB

W2:

| 7 | 6 | 5 | 4 | 3 | 2 | 1 | 0 |
|---|---|---|---|---|---|---|---|
| SP | B L K | | | | | | |

FIG. 7

(A) PBAD | (127) | 0 | 1 | 2 | (3) | 7 | 8 | 9 | 10 | 2 | 12 | 13 | 14 | (15) | 16 | 17 | 18 | 19

(B) PRF

(C) BCF

(D) CNTEN

(E) SYNG

(F) CNTCR

(G) QBC | 0 | 1 | 2 | 0 | 1 | 2 | 3 | 0 | 1 | 2 | 2 | 3 | 4 | 5 | 6

(H) BCCK

(I) BZRVF

EP 0 316 184 B1

EP 0 316 184 B1

# FIG. 8

(a) R3CP

(b) area

sub data area 1 | main data area | sub data area 2

(c) PBAD

0 → 7 | 0 → 127 | 8 → 15

(d) R3ADR

0 → 13 → 35 → 176 → 195

(e) SUBPCM

(f) R12CP

# FIG. 9

(a)  R3CP

(b)  R3ADR

| 0 | 1 | 2 |
|---|---|---|

(c)  RCADR

(d)  STBLK = 0

| 0 | 1 | 2 |
|---|---|---|

(e)  STBLK = 0.5

| 0 | 1 | 2 |
|---|---|---|

(f)  STBLK = -1.0

| -1 | 0 | 1 |
|---|---|---|

(g)  RFIN

# FIG.10

(a) R3CP

*10 blocks*

(b) RFIN | ATF | *main data area* | ATF |

(c) SRPR

(d) RFOUT | *sub 1* | | *sub 2* |

(e) RADR 0 → 195

(f) WRRAM

(g) RDRAM

EP 0 316 184 B1

FIG.11

EP 0 316 184 B1

EP 0 316 184 B1

FIG.12

(a)

(b)